# EUROPÄISCHE PATENTSCHRIFT

(11) **EP 4 384 313 B1**
(45) Veröffentlichungstag und Bekanntmachung des Hinweises auf die Patenterteilung: **18.02.2026**
(21) Anmeldenummer: 22765446.4
(22) Anmeldetag: 11.08.2022
(51) Int. Cl.: B01J 19/00

(54) **PLATTENELEMENT FÜR REAKTIONSMODULE ODER -SYSTEME UND ENTSPRECHENDE VERFAHREN**
PLATE ELEMENT FOR REACTION MODULES OR SYSTEMS AND CORRESPONDING PROCESSES
ÉLÉMENT EN FORME DE PLAQUE POUR MODULES OU SYSTÈMES DE RÉACTION ET PROCÉDÉS ASSOCIÉS

(30) Priorität: 13.08.2021 DE 102021208923
(43) Veröffentlichungstag der Anmeldung: 19.06.2024
(73) Patentinhaber: Ineratec GmbH, 76187 Karlsruhe (DE)
(72) Erfinder: PFEIFER, Peter, 76351 Linkenheim-Hochstetten (DE); SCHMIDT, Sebastian, 76227 Karlsruhe (DE); PFAFF, Alexander, 76199 Karlsruhe (DE); BETZNER, Florian, 76185 Karlsruhe (DE)
(74) Vertreter: Casalonga
(86) Internationale Anmeldenummer: PCT/EP2022/072543
(87) Internationale Veröffentlichungsnummer: WO 2023/017121

(56) Entgegenhaltungen:
- WO-A2-2007/032810
- WO-A2-2007/048641
- US-A1- 2011 002 818
- US-A1- 2013 041 050
- US-B1- 7 172 735

## Beschreibung

### Hintergrund / Stand der Technik

Unter Berücksichtigung der Probleme, die mit steigender Erderwärmung und der geringeren Verfügbarkeit von fossilen Brennstoffen einhergehen, wird es immer wichtiger, praktikable und flexible Lösungen zu finden, um Abfallprodukte, wie etwa Abfallgase, in höherwertige Kohlenwasserstoff-Verbindungen umzuwandeln.

Ein leicht und überall verfügbares Ausgangsprodukt für eine solche Umwandlung ist insbesondere CO₂. Um aber den Kohlenstoff aus CO₂ für die Herstellung von höherwertigen Kohlenwasserstoffen verfügbar zu machen, muss dieser zunächst "aktiviert" werden, beispielsweise indem CO₂ in Kohlenmonoxid (CO) umgewandelt wird.

Im Hinblick auf die Umwandlung von CO₂ in CO werden in der Literatur verschiedene Reaktoren und Verfahren diskutiert. In der DE 10 2017 120 817 wird z.B. ein Reaktor beschrieben in welchem vorteilhaft eine sog. rWGS-Reaktion (englisch: reverse water gas shift reaction) durchgeführt werden kann. Die endotherme rWGS-Reaktion benötigt allerdings hohe Temperaturen (typischerweise oberhalb von 600°C), auch um störende Nebenreaktionen wie etwa Methan- oder Rußbildung zu vermeiden oder zu minimieren. Um nun solch hohe Temperaturen zu erreichen, muss ein erheblicher Energieeintrag in das System erfolgen (und/oder der Energieverlust insbesondere auch Wärmeverlust muss minimiert werden). Ebenso ist es vorteilhaft, die in das System eingetragene Energie auch für weitere (Folge) Prozesse, also nicht nur die rWGS-Reaktion, zu nutzen. Auch andere endotherme Hochtemperaturprozesse wie etwa die Ammoniaksynthese bedürfen einer solchen thermischen/energetischen Optimierung und entsprechender Reaktormodule und Reaktorsysteme.

WO 2021/063796 beschreibt Reaktoren zur "on demand" Synthese für Methanol cracking und rWGS. Dabei werden die Eduktgase über strukturierte Katalysatorbahnen geleitet, in welchen das katalytisch aktive Material auf die Oberflächen dieser Bahnen abgeschieden wird und weiterhin eine entsprechende Struktur eines elektrisch leitenden Materials mit aufgebracht ist, um die Katalysatorschicht über eine Widerstandsheizung zu beheizen.

Gerade wenn fossile Begleit- und Überschussgase aufgearbeitet oder umgewandelt werden sollen sind Reaktorsysteme für solche Umwandlungen von Interesse, die je nach lokalen Erfordernissen hoch- oder herunterskaliert werden können und idealerweise von Standort zu Standort transportiert werden können, beispielsweise in transportablen Tragrahmen oder Containern.

US 7,172,735 betrifft ein modulares Mikroreaktionssystem, das ein Gehäuse und darin untergebrachte funktionelle Basismodule umfasst.

### Aufgabe

Eine Aufgabe der vorliegenden Erfindung besteht im Lichte des Standes der Technik unter anderem darin, Reaktoren für chemische Reaktionen bereitzustellen, in welchen leicht skalierbare Ansätze gefahren werden können.

Eine weitere Aufgabe der vorliegenden Erfindung besteht darin, bei endotherm (oder nur schwach exotherm) ablaufenden Reaktionen die Wärmebilanz zu optimieren.

### Aspekte der Erfindung

Die der Erfindung zugrundeliegenden Aufgaben werden gemäß eines **ersten Aspektes** zumindest teilweise gelöst durch ein Plattenelement zum Aufbau eines Reaktormoduls zur Durchführung endothermer Reaktionen, wobei das Plattenelement zumindest aufweist:
- mindestens einen ersten mikro- oder milli-strukturierten Eduktfluid-Kanal zur Zuleitung eines ersten Eduktfluids, und
- mindestens einen zweiten mikro- oder millistrukturierten Eduktfluid-Kanals zur Zuleitung eines zweiten, vom ersten verschiedenen, Eduktfluids,
   und/oder
- mindestens einen mikro- oder millistrukturierten Produktfluid-Kanal zur Ableitung von einem oder mehreren Produktfluiden,

wobei optional ein mindestens erster und ein mindestens zweiter Eduktfluid-Kanal in einer gemeinsamen Mischzone zusammengeführt sind,
wobei das Plattenelement weiterhin mindestens eine Reaktionszone aufweist, die mit einem Katalysator beschickt werden kann,
wobei sämtliche Fluid-Kanäle mit der mindestens einen Reaktionszone stofflich verbunden sind,
wobei das Plattenelement mindestens ein Heizelement aufweist oder aufnehmen kann,
wobei das mindestens eine Heizelement in thermischer Verbindung mit der Reaktionszone steht.
Das erfindungsgemäße Plattenelement ist ferner dadurch gekennzeichnet, dass erster und zweiter Eduktfluid-Kanal, jeweils getrennt, jeweils mindestens ein getrennt regelbares Heizelement enthalten.

Im Sinne der vorliegenden Erfindung bedeutet *"stofflich verbunden",* dass ein Fluid prinzipiell ungehindert in die verbundenen Elemente strömen kann, also beispielsweise von einem Kanal in eine Zone oder umgekehrt.

Im Sinne der vorliegenden Erfindung bedeutet *"thermisch verbunden"* oder *"in thermischer Verbindung stehen",* dass Wärmeenergie durch Konvektion, Strahlung und Wärmeleitung übergehen kann, beispielsweise von einem Heizelement auf eine Reaktionszone oder von einem Heizelement auf ein Eduktfluid.

In Ausführungsformen ist das mindestens eine mit mindestens einem ersten und/oder mit mindestens einem zweiten Eduktfluid-Kanal in stofflicher Verbindung stehende Heizelement thermisch mit der Reaktionszone verbunden wobei dieses Heizelement von dieser Reaktionszone über eine kleinste gemeinsame Distanz von nicht mehr als 10 mm, vorzugsweise nicht mehr als 5 mm entfernt ist, oder das in Strömungsrichtung am weitesten stromabwärts gelegene Ende des Heizelements in Strömungsrichtung nicht mehr als 25 mm, vorzugsweise nicht mehr als 15 mm von der Reaktionszone entfernt ist, oder beides zutrifft.

In Ausführungsformen bedeutet *"in thermischer Verbindung stehen",* dass Wärme durch Wärmeleitung über ein Plattenelement von mindestens einem Heizelement zur Reaktionszone gelangt, oder dass Wärme über das erhitzte Eduktflid vom Heizelement zur Reaktionszone gelangt, oder dass beides zutrifft.

In Ausführungsformen bedeutet *"in thermischer Verbindung stehen",* dass zwei Bereiche eines Plattenelement (oder eines Reaktormoduls bzw. eines Reaktorsystems) so thermisch leitend miteinander verbunden sind, dass eine Wärmeleitfähigkeit von 5 W/mK bis 20 W/mK bei 20°C gegeben ist, vorzugsweise von 8 W/mK bis 16 W/mK bei 20°C, weiter vorzugsweise von 10 W/mK bis 15 W/mK bei 20°C und/oder von 10 W/mK bis 50 W/mK bei 800°C, vorzugsweise von 15 W/mK bis 40 W/mK bei 800°C, weiter vorzugsweise von 20 W/mK bis 35 W/mK bei 800°C. Diese Wärmeleitfähigkeiten erlauben insbesondere eine effiziente Beheizung des Katalysators auch durch nicht im Katalysatorbett befindliche Heizelemente.

Diese "direkte" Beheizung sowohl der (aller) Eduktfluide als auch der Reaktionszone steht ist vorteilhaft gegenüber den im Stand der Technik genannten Ausführungsformen, da in der Reaktionszone und hier insbesondere im Katalysator geringere Temperaturgradienten auftreten, die Eduktfluide gleichmäßig auf die für eine endotherme Rektion notwendige hohe Temperatur gebracht und im Katalysator nur einen geringfügigen, wenn überhaupt, Wärmeverlust erleiden.

Im Sinne der vorliegenden Erfindung bedeuten "hohe Temperaturen" Temperaturen von 400°C bis 1500 °C, vorzugsweise 500°C bis 1200°C, weiter vorzugsweise 600°C bis 1100°C, besonders bevorzugt 700°C bis 1000°C.

Im Sinne der vorliegenden Erfindung bedeutet "direkter physikalischer Kontakt" dass das Eduktfluid mit zumindest einem Teil des Heizelements in direktem physikalischen Kontakt tritt, so dass das Eduktfluid von diesem Teil des Heizelements abgelenkt oder umgelenkt wird und/oder dass durch Querschnittsänderung im Sinne des Hagen Poiseuille Gesetzes eine Änderung der Strömungseigenschaften erfolgt.

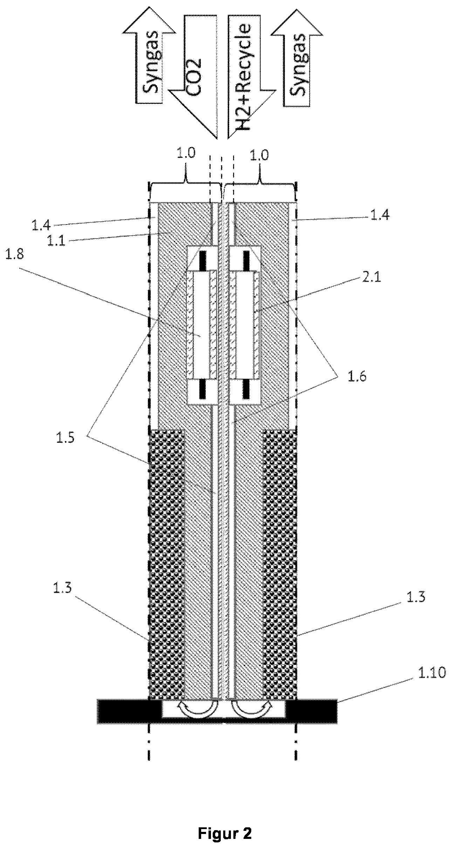

Das erfindungsgemäße Plattenelement ist dadurch gekennzeichnet, dass (wie in Figur 2 illustriert) erster und zweiter Eduktfluid-Kanal, jeweils getrennt, jeweils mindestens ein getrennt regelbares Heizelement aufweisen. Dabei ist es bevorzugt, dass die Heizelement(e) in direktem physikalischen Kontakt vom Eduktfluid umflossen bzw. durchflossen werden.

In Ausführungsformen der Erfindung enthält das Heizelement einen Widerstandsdraht, der von einer keramischen Hülle umgeben ist, wobei der Draht vorzugsweise vollständig von einer keramischen Hülle umgeben ist.

In Ausführungsformen der Erfindung ist das Heizelement über mindestens ein hochtemperaturfestes, vorzugsweise flexibles, Material mit dem Plattenelement formschlüssig verbunden.

In Ausführungsformen der Erfindung weist das hochtemperaturfeste, vorzugsweise flexible, Material ein Fasermaterial oder ein Filzmaterial auf, vorzugsweise ausgewählt aus Aluminium-, Zirkon- oder Silizium-Oxiden/Hydroxiden, oder Kombinationen davon. In Ausführungsformen besteht das hochtemperaturfeste, vorzugsweise flexible, Material aus diesen oder aus einem dieser Stoffe.

Im Sinne der vorliegenden Erfindung bedeutet "formschlüssig" dass eine Außenfläche des Heizelementes über das hochtemperaturfeste Material durch Ineinandergreifen von Oberflächenstrukturen mit einer Fläche eines Plattenelements verbunden ist, so dass vorzugsweise alle drei Komponenten (Heizelement, hochtemperaturfestes Material und Plattenelement) gegeneinander fixiert sind, vorzugsweise auch bei fehlender oder unterbrochener Kraftübertragung.

Im Sinne der vorliegenden Erfindung bedeutet "hochtemperaturfest" dass keine die Funktionalität der Plattenelemente oder Reaktormodule beeinträchtigende physikalische oder chemische Änderungen der Materialien auftreten, insbesondere nicht bei Temperaturen bis zu 900°C, bis zu 1100°C oder bis zu 1500°C.

Im Sinne der vorliegenden Erfindung bedeutet "flexibel", dass das Material biegsam und elastisch ist, insbesondere in alle drei Raumrichtungen elastisch.

In Ausführungsformen weist das Plattenelement zumindest einen elektrischen Anschluss zum Betrieb eines Heizelementes auf, vorzugsweise eine Pluralität solcher elektrischen Anschlüsse, wobei der elektrische Anschluss vorzugsweise im Wesentlichen senkrecht zur Strömungsrichtung der Edukt- und Produktfluide angeordnet ist/sind, wobei vorzugsweise sämtliche elektrische Anschlüsse.im Wesentlichen senkrecht zur Strömungsrichtung der Edukt- und Produktfluide angeordnet sind.

Diese im Wesentlichen orthogonale oder leicht gegen die Strömungsrichtung der zu erwärmenden Gase Anordnung der elektrischen Durchführung (also "seitlich" abstehend bei senkrecht "stehend" angeordneten Plattenelementen) ist mit dem Vorteil verbunden, dass die Platten und dabei insbesondere die Kanäle besser gegeneinander abgedichtet werden können. Hier wirkt maximal der statische Druck der Strömung, nicht aber der dynamische Druck entlang der Durchführung.

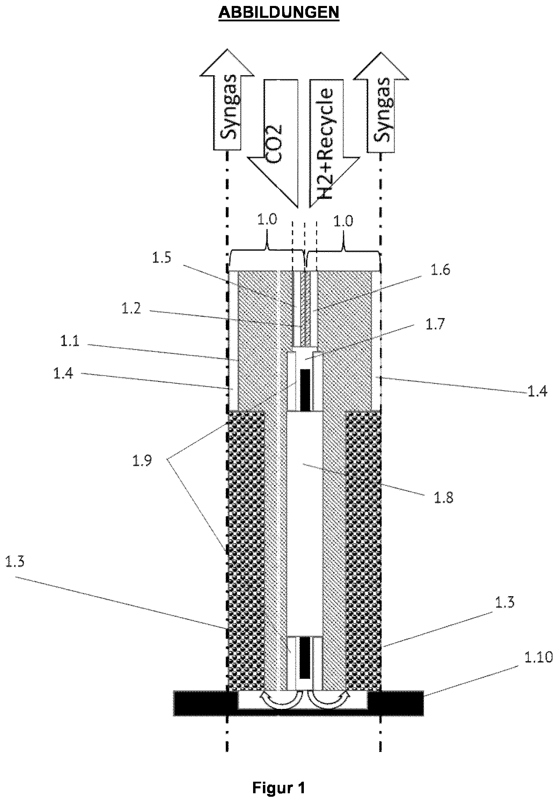

In Ausführungsformen der Erfindung ist das mindestens eine Heizelement im Wesentlichen parallel zur Reaktionszone angeordnet (siehe Figur 1).

In Ausführungsformen der Erfindung ist das mindestens eine Heizelement im Wesentlichen senkrecht zur Reaktionszone angeordnet.

Im Sinne der vorliegenden Erfindung bedeutet *"im Wesentlichen senkrecht"* einen Winkel von 85° bis 95° und *"im Wesentlichen parallel"* einen Winkel von 175° bis 185°.

In bevorzugten Ausführungsformen ist das mindestens eine mit mindestens einem ersten und/oder mit mindestens einem zweiten Eduktfluid-Kanal in stofflicher Verbindung stehende Heizelement thermisch leitend mit der Reaktionszone verbunden, und ist dieses Heizelement von dieser Reaktionszone über eine geringste gemeinsame Distanz von nicht mehr als 10 mm, vorzugsweise nicht mehr als 5 mm entfernt, und/oder das Heizelement ist in Strömungsrichtung nicht mehr als 35 mm, vorzugsweise nicht mehr als 25 mm besonders bevorzugt nicht mehr als 15 mm von der Reaktionszone entfernt.

In Ausführungsformen ist das in Strömungsrichtung am weitesten stromabwärts gelegene Ende eines Heizelements in Strömungsrichtung nicht mehr als 45 mm, 25 mm, vorzugsweise nicht mehr als 15 mm vom Beginn der Reaktionszone entfernt.

In Ausführungsformen umfasst ein *"*in thermische Verbindung stehen", dass Wärme durch Wärmeleitung über ein Plattenelement vom Heizelement zur Reaktionszone gelangt, oder über das durch ein Heizelement erhitzte Eduktflid, oder beides.

In bevorzugten Ausführungsformen beträgt die (über das gesamte Plattenelement gemittelte) Wärmeleitfähigkeit des Plattenelements von 5 W/mK bis 20 W/mK bei 20°C, vorzugsweise von 8 W/mK bis 16 W/mK bei 20°C, weiter vorzugsweise von 10 W/mK bis 15 W/mK bei 20°C und/oder von 10 W/mK bis 50 W/mK bei 800°C, vorzugsweise von von 15 W/mK bis 40 W/mK bei 800°C, weiter vorzugsweise von 20 W/mK bis 35 W/mK bei 800°C. Diese Wärmeleitfähigkeiten erlauben insbesondere eine effiziente Beheizung des Katalysators auch durch nicht im Katalysatorbett befindliche Heizelemente.

Im Sinne der vorliegenden Erfindung ist die *"geringste gemeinsame Distanz"* die kleinste Länge, die von irgendeinem an der äußeren Peripherie liegenden Teil des Heizelements zu irgendeinem Teil der äußeren Peripherie der Reaktionszone gemessen werden kann. Geringe Distanz ist hier gleichbedeutend mit "gutem Wärmeübergang", da mit zunehmender Entfernung der Wärmeeintrag von Heizelement in Reaktionszone signifikant geringer wird bzw. die Wärmeverluste zunehmen.

Die der Erfindung zugrundeliegenden Aufgaben werden gemäß eines **zweiten Aspektes** zumindest teilweise gelöst durch ein **Reaktormodul** zur Durchführung endothermer Reaktionen bei hohen Temperaturen, wobei das Reaktionsmodul mindestens zwei gegeneinander verpresste und gegeneinander abgedichtete Plattenelemente wie vorstehend beschreiben oder wie insgesamt in der vorliegenden Schrift beschrieben aufweist, vorzugsweise mindestens drei oder vier Plattenelemente, weiter vorzugsweise genau drei oder vier Plattenelemente, wobei zumindest zwei Plattenelemente voneinander verschieden sind, insbesondere im Hinblick auf ihre Geometrie und/oder Strukturierung.

In Ausführungsformen der Erfindung sind zumindest zwei der gegeneinander verpressten und gegeneinander abgedichteten Plattenelemente durch zumindest zwei allen Plattenelementen gemeinsamen Kanal zur Zufuhr von Eduktfluid sowie zumindest einen allen Plattenelementen gemeinsamen Kanal zur Abfuhr von Produktfluid stofflich miteinander verbunden.

In Ausführungsformen steht mindestens ein Heizelement, vorzugsweise die Mehrzahl der im Reaktormodul befindlichen Heizelemente, weiter vorzugsweise alle Heizelemente, jeweils mit dem ersten Eduktfluid oder dem zweiten Eduktfluid, oder beiden, in direktem physikalischen Kontakt.

Im Rahmen der vorliegenden Erfindung ist einer "Mehrzahl" an Heizelementen zumindest die Hälfte aller Heizelemente.

In Ausführungsformen wird mindestens ein Heizelement, bzw. werden vorzugsweise die Mehrzahl der im Reaktormodul befindlichen Heizelemente in einem Edukfluid-Kanal oder in einer Mischzone, oder in beiden, von Edukfluid umströmt und/oder durchströmt.

Die der Erfindung zugrundeliegenden Aufgaben werden gemäß eines **dritten Aspektes** zumindest teilweise gelöst durch ein **Reaktorsystem** enthaltend zumindest drei, vorzugsweise zumindest sechs, weiter vorzugsweise zumindest neun im Wesentlichen baugleiche Reaktormodule wie vorstehend oder in der vorliegenden Offenbarung insgesamt beschrieben, die parallel nebeneinander geschaltet sind.

Im Sinne der vorliegenden Erfindung bedeutet *"*im Wesentlichen baugleich" dass die Reaktormodule zwar geringfügige Abweichungen, insbesondere aufgrund von Fertigungstoleranzen, aufweisen können aber im Hinblick auf Funktion, Durchsatz und andere Kennzahlen von Reaktoren, abgehen von Fehlertoleranzen, gleich sind.

In Ausführungsformen wird die Heizung bevorzugt mit Drehstrom (also drei Phasen) betrieben. In diesem Kontext sind in Vielfachen von "Drei" parallel geschaltete Reaktormodule innerhalb eines Reaktorsystems besonders effizient und damit bevorzugt.

In Ausführungsformen der Erfindung weist das Reaktorsystem einen druckfesten Behälter auf, in welchem die Reaktormodule stofflich von der Umgebung getrennt angeordnet sind (also kein Stoffaustausch mit der Umgebung stattfinden kann). Vorzugsweise sind die Reaktormodule dabei im Wesentlichen senkrecht zur Standfläche (also dem Boden, auf welchem sich das Reaktorsystem befindet) angeordnet.

In Ausführungsformen der Erfindung weisen alle Reaktormodule zumindest zwei gemeinsame Kanäle zur Zufuhr von Eduktfluid sowie zumindest einen gemeinsamen Kanal zur Abfuhr von Produktfluid auf.

In Ausführungsformen der Erfindung wird der druckfeste Behälter mit einem im Reaktorsystem eingesetzten Reaktionsgas beaufschlagt, insbesondere mit einem Wasserdampfstrom oder einem Wasserstoffstrom, oder einer Mischung von beiden.

In Ausführungsformen der Erfindung weist der druckfeste Behälter eine Beheizung auf.

Die der Erfindung zugrundeliegenden Aufgaben werden gemäß einem **vierten Aspekt** zumindest teilweise gelöst durch ein **Verfahren** zur Durchführung endothermer Reaktionen, insbesondere bei hohen Temperaturen, unter Verwendung eines Reaktorsystems wie vorstehend und wie in der Offenbarung insgesamt beschrieben.

In Ausführungsformen der Erfindung ist die Reaktion ausgewählt aus einer Reformierung, insbesondere Methanreformierung, Ammoniaksynthese, Ammoniakspaltung, Methanolspaltung oder reverser Wassergaskonvertierung (rWGS).

In Ausführungsformen der Erfindung stehen erstes und zweites Eduktfluid mit unterschiedlichen, getrennt regelbaren Heizelementen in thermischem, vorzugsweise auch in stofflichem, Kontakt und der Energieeintrag in den Eduktfluid-Strom über das jeweilige Heizelement ist unterschiedlich.

In Ausführungsformen der Erfindung sind erstes und zweites Eduktfluid voneinander verschieden, wobei vorzugsweise das erste Eduktfluid ein im Wesentlichen CO₂ enthaltendes Fluid ist, und das zweite Eduktfluid ein H₂ enthaltendes Fluid ist.

In Ausführungsformen wird der druckfeste Behälter des Reaktorsystems mit einem im Reaktorsystem eingesetzten Reaktionsgas beaufschlagt, insbesondere mit einem Wasserdampfstrom oder einem Wasserstoffstrom, oder einer Mischung von beiden, wobei der Gasstrom bevorzugt über Leckagen an der Durchführung oder den Durchführungen zu einem oder mehreren Heizelementen zum im Reaktionsraum befindlichen Katalysator gelangt.

In Ausführungsformen ist der Druck außerhalb des Reaktormoduls und innerhalb des druckfesten Behälters des Reaktorsystems größer als in den Reaktionsräumen des Reaktormoduls.

### Detaillierte Beschreibung

Ein "Plattenelement" im Sinne der vorliegenden Erfindung ist ein dreidimensionaler Körper, welcher definiert wird durch zwei sich gegenüberliegende, vorzugsweise unterschiedlich strukturierte quaderförmige oder quadratische Flächen, die voneinander beabstandet sind, wobei das Plattenelement bedingt durch die Strukturierung zwar eine maximale Dicke aber nicht notwendigerweise eine konstante Dicke aufweist.

Die maximale Dicke eines Plattenelements ist im Verhältnis zu den Längen der Flächen signifikant geringer, vorzugsweise beträgt die Dicke wenigstens 1/1000 der maximalen Länge, vorzugsweise weniger als 1/100,

Plattenelemente sind vorzugsweise quaderförmig, sind also länger (höher) als sie breit sind.

In Ausführungsformen ist die Länge eines Plattenelements von 50 cm bis 5 m, vorzugsweise von 1 m bis 3 m, weiter vorzugsweise von 1 m bis 2 m.

In Ausführungsformen ist die Breite eines Plattenelements von 5 cm bis 100 cm, vorzugsweise von 10 cm bis 60 cm, weiter vorzugsweise von 20 cm bis 50 cm.

In Ausführungsformen ist die Dicke eines Plattenelements von 1 mm bis 50 mm, vorzugsweise von 2 mm bis 30 mm, weiter vorzugsweise von 3 mm bis 20 mm,

In Ausführungsformen enthält das Plattenelement, bevorzugt besteht das Plattenelement aus, ein/einem Metall oder einer Metall-Legierung. Bevorzugt ist diese Legierung ein hochtemperaturfester Stahl. Dieser Stahl ist vorzugsweise chemisch stabil, und insbesondere gegen die Einlagerung von Kohlenstoff (metal dusting) resistent.

Geeignete beispielhafte Stähle sind als Alloy 800 H/HT, Inconel CA 602, Inconel 693 oder unter den DIN Bezeichnungen 2.4633 oder 1.4876 bekannt, weiterhin Alloy 601, Alloy 690, Alloy 693 und Alloy 699 XA. Der Stahl kann weiterhin zumindest teilweise mit einer Alitierung, Wasserglasbeschichtung oder Zinnbeschichtung versehen sein, um die Resistenz gegen metal dusting /Ruß-Bildung zu erhöhen.

Ein erfindungsgemäßes Plattenelement weist mindestens drei mikro- oder millistrukturierte Kanäle auf, welche der Zu- oder Ableitung von Eduktfluiden bzw. Produktfluiden in/aus einer Reaktionszone dienen.

Die charakteristische Dimension von "mikro- oder millistrukturierten" Kanälen im Sinne der Erfindung bezieht sich auf die "größte Querschnittslänge" mit welcher der Querschnitt eines Kanals beschrieben werden kann. Diese Kanäle können einen kreisförmigen Durchmesser aufweisen (in diesem Fall ist die größte Querschnittslänge der Durchmesser) oder oval bzw. ovoid sein, in welchem Fall es zumindest zwei charakteristische Querschnittslängen gibt, wobei die größere die "größte Querschnittslänge" ist. Bei quadratischen Kanälen oder Kanälen mit quaderförmigem Querschnitt ist die größte Querschnittslänge die Diagonale.

Im Sinne der vorliegenden Erfindung sind die Kanäle in Plattenelemente eingebracht, z.B. eingefräst. Durchströmte Querschnitte im Sinne von Rohren (mit einem Innendurchmesser und einem Außendurchmesser), wie diese typischerweise in Rohrbündelreaktoren eingesetzt werden sind bevorzugt keine "Kanäle" im Sinne der vorliegenden Erfindung.

Kanäle in Plattenelementen im Sinne der vorliegenden Erfindung sind somit keine Rohre wie diese in Rohrbündelreaktoren eingesetzt werden.

In Ausführungsformen reicht diese "größte Querschnittslänge" eines "mikro- oder millistrukturierten" Kanales von 500 µm bis 100 mm, vorzugsweise von 800 µm bis 50 mm weiter bevorzugt von 1 mm bis 40 mm, weiter bevorzugt von 2 mm bis 20 mm.

In Ausführungsformen sind die Kanäle nebeneinander angeordnet und/oder übereinander angeordnet, und verlaufen im Wesentlichen parallel zueinander. Durch das Vorliegen einer Vielzahl von Kanälen nebeneinander (oder übereinander) wird insgesamt der Wärmeübergang innerhalb eines Plattenelements sowie auch zwischen Plattenelementen erhöht.

In Ausführungsformen sind die Kanäle in und/oder zwischen erfindungsgemäßen Plattenelementen angeordnet. In Ausführungsformen sind die Kanäle zwischen zwei erfindungsgemäßen Platten angeordnet d.h. die Kanäle werden durch Verbindung einer ersten erfindungsgemäßen Platte mit einer zweiten erfindungsgemäßen Platte zu einem Plattenpaar gebildet.

Eduktfluid und Produktfluid-Kanäle können von gleicher oder verschiedener Geometrie/Bauart sein.

Zusätzlich zu diesen (vorzugsweise senkrecht, also in "stehenden" Platten angeordneten) Eduktfluid- und Produktfluid-Kanälen enthalten die Plattenelemente, insbesondere wenn diese zu einem Reaktormodul oder zu einem Reaktorsystem zusammengefügt sind, vorzugsweise auch jeweils mindestens zwei Eduktfluidzufuhrvorrichtungen welche jeweils mit einer Eduktquelle verbunden sind, sowie zumindest eine Produktfluidableitungsvorrichtung, welche das Produktfluid sammelt und einer weiteren Verarbeitung zuführt (Detektion, Abscheidung, Folgereaktion, insbesondere Fischer-Tropsch Reaktion oder Methanolsynthese).

Sowohl die Eduktfluidzufuhrvorrichtungen, als auch die Produktfluidableitungsvorrichtung sind vorzugsweise senkrecht zu den mikro- und millistrukturierten Eduktfluid bzw. Produktfluid-Kanälen angeordnet, und erstrecken sich parallel zum Boden (siehe "Abschlussplatte" (1.10) in Figur 1), auf welchem die Vorrichtung aufgebaut ist bzw. parallel zur Stapelrichtung eines Stapels aus erfindungsgemäßen Platten (Reaktormodul, Reaktorsystem).

Vorzugsweise sind sowohl Eduktfluidzufuhrvorrichtungen als auch Produktfluidableitvorrichtung über Durchgangsbohrungen an einem ersten und/oder zweiten Ende einer erfindungsgemäßen Platte angeordnet.

Die Abdichtung sowohl der Eduktfluidzufuhrvorrichtung als auch Produktfluidableitvorrichtung gegen unerwünschten oder unkontrollierten Austritt von Eduktfluid und/oder Produktfluid kann durch temperaturbeständige O-Ringe (Temperaturen bis ca. 300°C sind möglich), durch Glimmerdichtung oder durch Schweißringdichtungen erfolgen. Analog können auch die Platten insgesamt gegeneinander abgedichtet werden.

In Ausführungsformen weist ein erfindungsgemäßes Plattenelement auf einer Oberfläche sowohl Eduktfluid-Kanäle als auch Produktfluidkanäle auf.

In Ausführungsformen weist ein erfindungsgemäßes Plattenelement ausschließlich Eduktfluid-Kanäle auf, wohingegen ein anderes Plattenelement ausschließlich Produktfluid-Kanäle aufweist, bzw. weist ein Plattenelement ausschließlich Eduktfluid-Kanäle oder Produktfluid-Kanäle aufweist.

In Ausführungsformen, insbesondere, wenn die im Plattenelement durchzuführende Reaktion eine rWGS Reaktion ist, ist mindestens ein Eduktfluid ein im Wesentlichen CO₂ enthaltendes oder daraus bestehendes Fluid. Mindestens ein weiteres Eduktfluid ist dann ein H₂ enthaltendes oder daraus bestehendes Fluid. CO₂-Eduktfluid sowie H₂-Eduktfluid werden in voneinander getrennten, separaten Eduktfluidkanälen zur Reaktionszone geleitet und erst bei Eintritt in diese Zone, welche im Betrieb Katalysator aufweist, vermischt.

Das Produktfluid weist in Ausführungsformen CO auf. Weiterhin kann das Produktfluid ein oder mehrere Fluid(e) ausgewählt aus CO₂, H₂, CH₄ oder Mischungen daraus aufweisen.

Ein erfindungsgemäßes Plattenelement weist mindestens eine Reaktionszone auf, welche mit Katalysator beschickt werden kann bzw. welche im Betrieb mit Katalysator, insbesondere einer Katalysator-Festbett-Schüttung beschickt wird. In Ausführungsformen ist der Katalysator geeignet, die Umsetzung von Kohlendioxid (CO₂) und Wasserstoff (H₂) zu Kohlenmonoxid (CO) und Wasser (H₂O) zu fördern. Diese Umsetzung wird als reverse Wassergaskonvertierung (reverse water gas shift) rWGS bezeichnet.

In Ausführungsformen besteht der Festbett-Katalysator im Wesentlichen aus Partikeln mit einem mittleren Durchmesser von 500 µm bis 5 mm, bevorzugt 1 mm bis 3 mm.

In Ausführungsformen ist die Reaktionszone im Wesentlichen auf derjenigen Seite eines Plattenelementes angeordnet, welche der Seite des Plattenelements gegenüberliegt, welche die Eduktfluid und Produktfluid-Kanäle bildet, gegebenenfalls im Zusammenspiel mit weiteren Platten eines Reaktormoduls.

In Ausführungsformen erstreckt sich diese Reaktionszone über mindestens 50%, vorzugsweise mindestens 80% der Breite auf dieser einen Seite Plattenelements, sowie über maximal 30% der Gesamtlänge des Plattenelements, vorzugsweise maximal 20% der Länge.

In Ausführungsformen ist die Reaktionszone, im Wesentlichen parallel zur Strömungsrichtung der Edukt- und Produktfluide angeordnet.

Vorzugsweise hat die Reaktionszone, eine Länge ("Höhe", wenn die Plattenelement, wie es bevorzugt ist, "stehend" bzw. senkrecht angeordnet sind) von 5 cm bis 50 cm, bevorzugt 10 cm bis 30 cm, weiter bevorzugt 12 cm bis 25 cm.

Die Reaktion, insbesondere eine endotherme Reaktion, insbesondere eine rWGS-Reaktion, findet in der Reaktionszone statt. Die Reaktionszone, wird deshalb mittels thermischer Verbindung zu den erfindungsgemäßen Heizelementen sowie den vorgeheizten Eduktfluiden auf Temperaturen von mindestens 650°C, bevorzugt mindestens 700°C, weiter bevorzugt von 600°C bis 1500°C oder 1100°C, weiter bevorzugt von 700°C bis 1000°C, besonders bevorzugt von 700°C bis 900°C, weiter bevorzugt von 720°C bis780°C erhitzt.

In Ausführungsformen befinden sich in der Reaktionszone selber keine Heizelemente.

In Ausführungsformen wird die Reaktionszone ausschließlich über die vorgeheizten Eduktfluide sowie durch thermischen Kontakt mit den auch für das Aufheizen des Eduktgases vorgesehenen Heizelemente auf die zum Durchführen einer endothermen Reaktion notwendigen Temperatur hochgeheizt.

Ein erfindungsgemäßes Plattenelement, insbesondere erfindungsgemäße Plattenelemente in einem Reaktormodul weisen mindestens ein Heizelement auf, welches in thermischen Kontakt mit dem mindestens einen ersten Eduktfluidkanal oder dem mindestens einen zweiten Eduktfluidkanal, sowie der Reaktionszone steht.

Unter "Heizelement" im Sinne der vorliegenden Erfindung ist eine Vorrichtung zu verstehen, welche geeignet ist, thermische Energie vom Heizelement auf die in den Eduktfluidkanälen strömenden Fluide und in eine Reaktionszone zu übertragen. Dazu muss das Heizelement mit den in den Eduktfluidkanälen strömenden Fluiden sowie der Reaktionszone in thermischen Kontakt stehen. Die Übertragung der thermischen Energie kann über Leitung, Strahlung und Konvektion erfolgen. Vorzugsweise werden dabei die Eduktfluide von Temperaturen von 400°C bis 1500°C oder auf Temperaturen von 720°C bis 1100°C, vorzugsweise von 750°C bis 900°C erhitzt.

Das Heizelement weist vorzugsweise einen Widerstandsdraht auf, welcher sich bei Durchfluss von elektrischem Strom gemäß dem Ohm'schen Gesetz erwärmt.

Der Widerstandsdraht ist weiterhin vorzugsweise von einer keramischen Umhülle mindestens teilweise, vorzugsweise vollständig ummantelt, wobei der Querschnitt (Durchmesser oder größte Länge im Querschnitt) 2 - 8 mm, vorzugsweise 3 bis 6 mm beträgt.

In Ausführungsformen beträgt die Länge des Heizelements von 5 cm bis 40 cm, bevorzugt 10 bis 20 cm. Der Aufbau eines solchen Heizelements ist beispielhaft in der US 9,867,232 beschrieben. Bevorzugte Heizelemente dieser Art sind sogenannte "Strömungsheizer".

Vorzugsweise wird das mindestens eine Heizelement über mindestens ein hochtemperaturfestes, vorzugsweise flexibles Material, formschlüssig mit dem erfindungsgemäßen Plattenelement verbunden.

In Ausführungsformen ist das flexible Material eine Fasermatte, die um einen Faktor von 2 bis 5 verdichtet werden kann, ohne dass eine Kraft von außen merklich auf die Keramik des Heizelements übertragen wird.

Das hochtemperaturfeste, vorzugsweise flexible, Material ist vorzugsweise ausgewählt aus Al₂O₃ und/oder Glimmer. Vorzugsweise ist das hochtemperaturfeste, flexible Material als Fasermatte oder Vlies realisiert. Die Dicke der Fasermatte oder des Vlieses beträgt vorzugsweise weniger als 1 mm.

Das mindestens eine Heizelement wird zumindest teilweise, vorzugsweise vollständig von einem hochtemperaturfesten, vorzugsweise flexiblen, Material umschlossen. Dies ist mit dem Vorteil verbunden, dass so das Material somit auch als Durchschlagschutz gegen Spannungsüberschläge bei einem Bruch der keramischen Hülle des Widerstandsdrahts des Heizelements wirken kann.

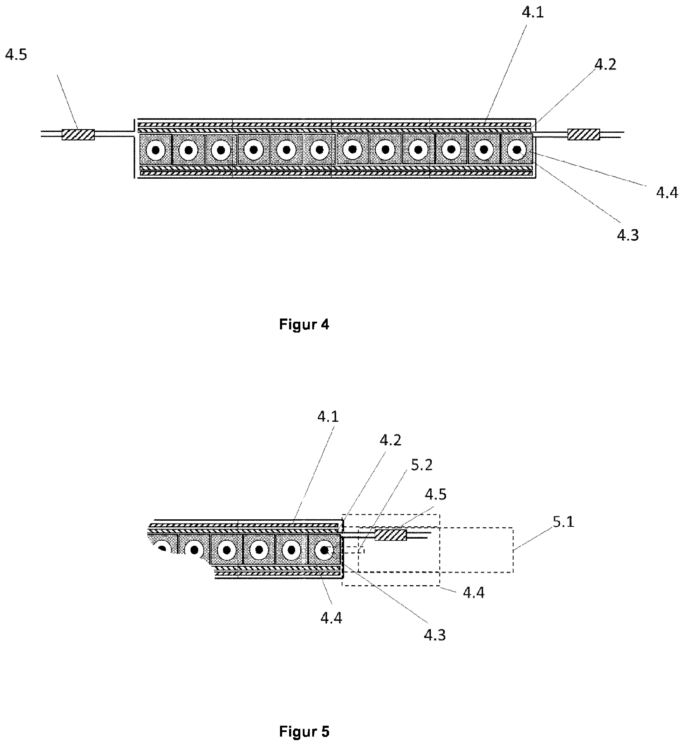

Vorzugsweise ist das hochtemperaturfeste, vorzugsweise flexible Material beidseitig in einer parallelen Anordnung um ein oder mehrere Heizelemente (siehe Figuren 4 und 5) angeordnet. Die Verbindung mit dem erfindungsgemäßen Plattenelement erfolgt vorzugsweise durch Verpressen.

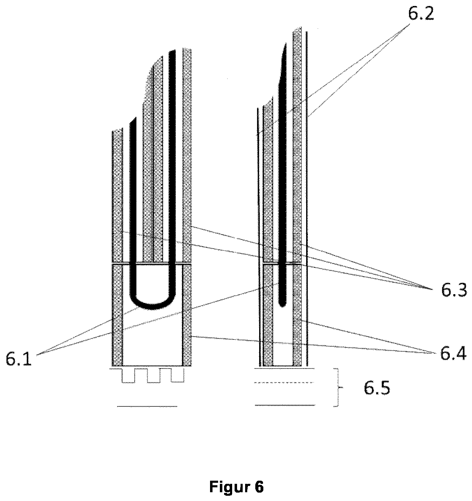

Das mindestens eine Heizelement kann weiterhin mit mindestens einer Stützvorrichtung ausgestattet sein. Die Stützvorrichtung erstreckt sich im Wesentlichen parallel zum Heizelement, und ist in direktem stofflichen Kontakt mit der Keramik des Heizelements beziehungsweise besteht aus demselben Material (siehe Figur 6).

Das erfindungsgemäße Plattenelement weist weiterhin elektrische Anschlüsse zum Betrieb des zumindest einen Heizelements auf.

Die elektrischen Anschlüsse werden bevorzugt seitlich, senkrecht (d.h. nicht in Strömungsrichtung der Eduktfluide und Produktfluide) aus dem erfindungsgemäßen Plattenelement ausgeführt, bevorzugt an der Ausgangsseite des Heizelements (siehe Figuren 4 und 5).

In Ausführungsformen wird der Querschnitt des Widerstandsdrahts vom eduktfluidumströmten Bereich hin zu den Anschlüssen, also den nicht von Eduktfluid umströmten Bereichen vergrößert, um einen thermisch induzierten Bruch des Widerstandsdrahts zu vermeiden.

Die Querschnittszunahme wird bevorzugt durch einen verdickenden Draht oder zwei verdrillte Drähte erzielt.

Mit Zunahme des Querschnitts des Widerstandsdrahts wird der Durchmesser des Heizelements insgesamt, unter Miteinbeziehen der umhüllenden Keramik, vergrößert. Somit kann auch die Durchführung aus den Plattenelementen heraus an diesen vergrößerten Durchmesser angepasst werden.

In Ausführungsformen ist die Durchführung bevorzugt aus den Plattenelementen hinaus in einer Ebene mit dem Heizelement welches eduktfluidumströmt ist, angeordnet. Dies hat den Vorteil, eine Längenänderung des Widerstandsdrahtes bei Stromfluss / Erwärmung auszugleichen und einen Spannungsüberschlag zu vermeiden.

Vorzugsweise weist das Plattenelement Schlitze an den Seiten auf, durch welche elektrische Anschlüsse durchgeführt werden können.

Vorzugsweise ist das zumindest eine Heizelement (bzw. ist die Mehrzahl der Heizelemente) im Wesentlichen parallel zur Reaktionszone angeordnet (siehe Figur 1). Diese Anordnung ist mit dem Vorteil verbunden, dass so der thermische Kontakt zwischen Heizelement und der Reaktionszone, maximiert werden kann. Insbesondere erfolgt die Übertragung der thermischen Energie "direkt" durch Wärmeleitung durch eine vergleichsweise dünne und massive Wand (also ohne unnötige oder signifikante Wärmesenken) über das erfindungsgemäße Plattenelement direkt in die Reaktionszone. Weiterhin wird auch Wärme über das erhitzte Eduktfluid in das Katalysatorbett eingetragen. Somit kann die Temperatur im Katalysatorbett maximiert werden, was insbesondere bei endothermen Reaktionen im Katalysatorbett vorteilhaft ist.
Diese Ausführungsform wird nachfolgend in **Figur 1** näher erläutert
Plattenpaar (1.0)
Erstes Plattenelement (1.1)
Zweites Plattenelement (1.2)
Reaktionszone, welche mit Katalysator beschickt werden kann (1.3) [in Platte 1 bzw. in Platte 4 eingebracht]
Produktfluidkanal (1.4), welcher ein Produktfluid aus 1.3 ableitet
Erster Eduktfluidkanal (1.5) welcher ein erstes Eduktfluid zur Zone (1.3) zuleitet
Zweiter Eduktfluidkanal (1.6), welcher ein zweites Eduktfluid zur Zone (1.3) zuleitet
Mischzone (1.7) in welcher beide Eduktfluidströme aus den Eduktfluidkanälen (1.5) und (1.6) vereinigt werden
Heizelement (1.8)

Stüzvorrichtung (1.9), welche vom Heizelement (1.8) beabstandet in der Mischzone (1.7) angeordnet ist.

Abschlussplatte (1.10), welche das Plattenpaar an einem Ende verschließt, so dass der vereinigte Eduktfluidfluss in die Reaktionszonen (1.3) umgelenkt wird.

Wie in Figur 1 gezeigt ist das zumindest eine Heizelement im Wesentlichen auf Höhe der Reaktionszone angeordnet, bevorzugt beginnend oberhalb der Reaktionszone oder mit dem Ausgang aus der Reaktionszone. Dies ist mit dem Vorteil verbunden, dass der Wärmeübergang von Heizelement zu Reaktionszone über die Länge der Reaktionszone gleichmäßig erfolgt sowie damit, dass der Katalysator nicht ungehindert abkühlen kann, was zu Nebenreaktionen führen kann, beispielsweise Methan-Bildung.

**Figur 2** zeigt eine Ausführungsform gemäß der vorliegenden Erfindung, welche im wesentlichen der Ausführungsform aus Figur 1 entspricht, mit dem Unterschied, dass die beiden voneinander verschiedenen Eduktfluide (z.B. CO₂ und H₂ im Gemisch) auch in getrennten Kanälen auf die für die Reaktion jeweils notwendige Temperatur geheizt werden, und zwar durch Umströmen/Durchströmen von Heizelementen. Dies ist mit mindestens zwei Vorteilen verbunden. Zum Einen können in dieser Ausführungsform die unterschiedlichen Eduktfluide auch gezielt und getrennt erhitzt werden (unterschiedliche Fluide benötigen unterschiedlichen Wärmeeintrag, um auf die für die Reaktion notwendige Temperatur "gebracht" zu werden). Zum Anderen können die Eduktfluide bis zum Erreichen der Reaktionszone getrennt geführt werden und werden gleichsam erst in der Reaktionszone miteinander gemischt. Dies ist für Reaktionen wie rWGS vorteilhaft, da erhitzte Edukfluide bereits miteinander reagieren (können), was u.a. zu Rußbildung an den Innenwänden der Eduktfluid-Kanäle führen kann.

Die Bezugszeichen in Figur 2 entsprechen den Bezugszeichen in Figur 1 mit der Ergänzung, dass (2.1) Fasermatten bezeichnet, welche die Heizelemente "elastisch" gegen Bruch der Keramik wegen thermischer Ausdehnung während des Betriebs schützen.

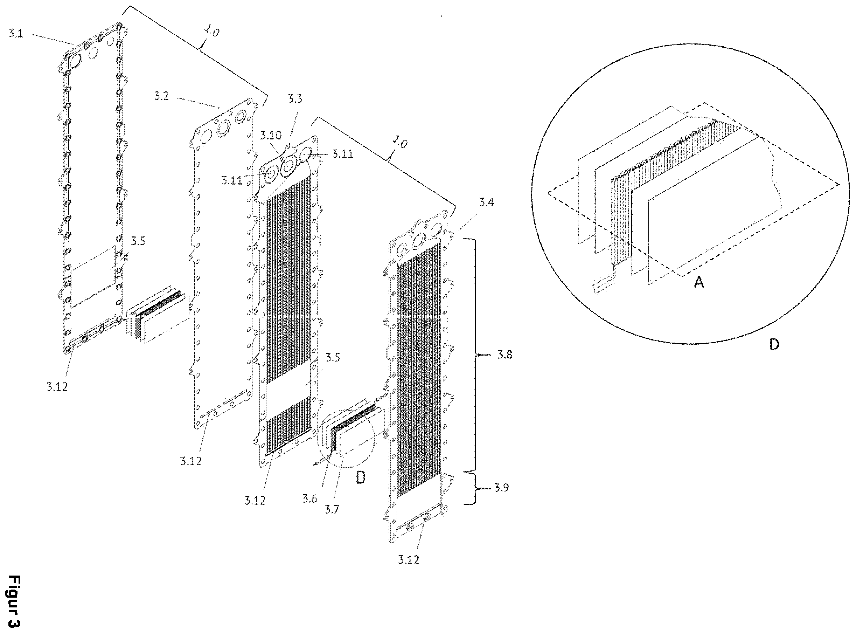

Die Figuren 3 - 5 zeigen eine Ausführungsform mit Fokus auf die Anordnung der von Eduktfluid in einer Mischzone durchströmten und umströmten Heizelemente, die hier in einem linearen Array angeordnet sind.

**Figur 3** ist eine Explosionszeichnung von vier Platten (3.1) - (3.4) (erstes, zweites, drittes und viertes Plattenelement) wie im Schnitt in Figur 2 gezeigt mit Aussparungen (3.5) für Heizelemente. Das entsprechend eingesetzte Array von Heizelementen ist (3.6), wobei die Heizelemente (siehe Detail D) durch beidseitig angeordnete Fasermatten (3.7) gegen Bruch der Keramik durch thermische Ausdehnung der Plattenelemente geschützt sind. In Platte (3.4) bezeichnen (3.8) die Produktfluid-Kanäle. (3.9) bezeichnet die Reaktionszone, hier eine Aussparung welche mit Festbett-Katalysator befüllt ist. Die Eduktfluid-Kanäle befinden sich auf Plattenelement 3.3 und 3.2 (in der Figur nicht sichtbar, da auf der abgewandten Seite des Plattenelements). Die Eduktfluide gelangen jeweils durch Umlenkschlitze 3.12 (vergleiche auch mit Figur 2) in die Reaktionszone (3.9). Dabei sind (3.11) die Eduktfluid Zuleitungsvorrichtungen und ist (3.10) die Produktfluid Ableitungsvorrichtung.

Der Schnitt (A) in Figur 3 ist den **Figuren 4 und 5** gezeigt. Dort ist (4.1) eine Lage Glimmer, welche als Durchschlagssicherung bei Bruch der Keramik (4.4) fungiert. Wie bereits oben erläutert dient die Fasermatte- (4.2) dem Schutz der Keramik gegen Bruch. (4.3) bezeichnet den Heizdraht. (4.5) schließlich bezeichnet eine Glimmerdichtung in der Nut zwischen zwei Platten. Die entsprechenden Bezugszeichen gelten auch für Figur 5 mit der Ergänzung, dass hier elektrische Anschlüsse gezeigt sind, insbesondere Bolzen (5.1) und eine Verschweißung (5.2) zwischen Heizdraht und Bolzen.

**Figur 6** schließlich zeigt ein Stützelement (6.4) in zwei verschiedenen um 90° gedrehten Schnittperspektiven, die je zwei Keramiken (6.3) paarweise und einen darin befindlichen Heizdraht mit Drahtbogen (6.1) schützen. Dabei zeigt (6.2) die begrenzenden Wandungen durch zwei Plattenelemente. (6.5) zeigt die Standplatte mit Kanälen in Stapelrichtung zur Umlenkung der Gase und Abstützung von Stützelementen (6.4) und des Katalysatorbetts.

Das erfindungsgemäße Plattenelement kann weiterhin mindestens eine Wärmerekuperationszone aufweisen. In dieser Zone findet vorzugsweise eine Wärmeübertragung vom heißen *Produktfluid* zu den in Gegenstrom geführten *Eduktfluiden* statt.

Diese Rekuperationszone befindet sich bevorzugt, insbesondere bei "stehenden Platten", oberhalb der Reaktionszone. Auch diese Wärmerekuperation zwischen Produktfluid und Eduktfluid ist vorteilhaft dadurch gegenüber Ausführungsformen des Standes der Technik (beispielweise gegenüber Rohrreaktoren) erhöht, dass in Kanälen in einem Plattenelement ein besonders guter Wärmetausch stattfinden kann, da weniger Wärmewiderstände überwunden werden müssen als beispielsweise in einem Rohrbündelrektor, bei welchem Durchmesser und Abstand der Rohre einer turbulenten Durchströmung bedürfen um Wärmeübertragungskoeffizienten an der Wand zu maximieren, oder die Wandstärke der Rohre höher sein muss als die Dicke der die Kanäle trennenden Platte . In den Kanälen steigt aufgrund der laminaren Strömung der Wärmeübertragungskoeefizient reziprok mit reduzierter Höhe der Kanäle.

In Ausführungsformen wird in diesen Rekuperationszonen ein Vorheizen oder Aufheizen der Eduktfluide auf 400°C und mehr, vorzugsweise auf 600°C und mehr, weiter vorzugsweise auf 700°C und mehr erreicht, bevor die Eduktgase mit Hilfe der erfindungsgemäßen Heizelemente auf die Endtemperatur vor Eintritt in die Reaktionszone gebracht werden.

In Ausführungsformen ist diese Wärmerekuperationszone (für Wärmetausch zwischen Produktfluid und Eduktfluid) stromaufwärts (in Strömungsrichtung der Eduktfluide) der Heizelemente angeordnet, vorzugsweise zumindest 10 cm stromaufwärts des am weitesten stromaufwärts gelegenen Endes des Heizelementes, weiter vorzugsweise zumindest 20 cm oder 50 cm.

In einem weiteren Aspekt betrifft die vorliegende Erfindung ein Reaktormodul zur Durchführung endothermer Hochtemperaturprozess, wobei das Reaktormodul mindestens zwei erfindungsgemäße Plattenelemente wie vorstehend und insgesamt hier beschrieben aufweist, vorzugsweise mindestens drei oder vier Plattenelemente, vorzugsweise genau vier Plattenelemente.

Vorzugsweise weist der Reaktor mindestens ein Plattenelementpaar auf, oder einen Stapel aus Plattenelementen oder aus Plattenelementpaaren. Zum Aufbau solcher Stapel wird ein erstes Plattenelement mittels einer umlaufenden Dichtung umfassend zum Beispiel Glimmer, gegen ein zweites Plattenelement angedrückt. Dieser Vorgang wird wiederholt, bis die gewünschte Stapelgröße erreicht ist und ein Reaktormodul aufgebaut ist.

Vorzugsweise weist das erste Plattenelement Eduktfluid-Kanäle auf, und das zweite Plattenelement weist Produktfluidkanäle auf. Dies hat den Vorteil, dass so die Durchströmung des Heizelements mit Eduktfluid(en) sichergestellt wird. Außerdem wird so der unerwünschte Austritt von Eduktfluid aus dem Plattenstapel hinaus verhindert.

Die Dichtung der Platten (bspw. Über Glimmer) wirkt weiterhin als Ausgleichselement für gegebenenfalls auftretende unterschiedlich starke Materialausdehnungen durch im Stapel oder im Plattenpaar auftretende Temperaturgradienten.

In Ausführungsformen ist die Dichtung "reversibel", kann also ohne Zerstörung eines Plattenelementes entfernt werden. Hierdurch ist eine einfache Zerlegung des Stapels oder des Plattenpaars zu Wartungs- oder Reparaturzwecken möglich.

In weiteren Ausführungsformen sind zumindest zwei erfindungsgemäße Reaktormodule wie vorstehend und in der Anmeldung insgesamt beschrieben zu einem Reaktorsystem parallel geschaltet, so dass der Durchsatz insgesamt - in technisch sinnvollem Rahmen - beliebig auf- und abskaliert werden kann.

Bevorzugt werden zumindest drei oder zumindest sechs oder neun Reaktormodule parallel geschaltet.

Das Reaktorsystem weist vorzugsweise weiterhin einen druckfesten Behälter auf, in welchem die Reaktormodule bzw. der Stapel aus Plattenelementen oder Plattenelementpaaren, ohne Stoffaustausch mit der Umgebung betrieben werden können. Dies ist mit dem Vorteil verbunden, dass die aus dem Plattenelement hinaus abgeführten elektrischen Anschlüsse für das mindestens eine Heizelement nicht vollständig abgedichtet werden müssen, und austretendes Eduktfluid oder austretende Eduktfluide aufgefangen werden können.

Das Anbringen der Reaktormodule erfolgt vorzugsweise über eine Aufhängung. Eine Aufhängung (am vergleichsweise kühlen oberen Ende) ist vorteilhaft, weil somit die heißen Bereiche der Plattenelemente nicht thermisch leitend mit dem äußeren Gehäuse verbunden sind.

In Ausführungsformen wird der druckfeste Behälter mit einem Spülgas, im Falle einer rWGS mit Wasserstoff, beaufschlagt. Dies hat den Vorteil, dass aus einem Reaktormodul gegebenenfalls ausgetretene Eduktfluide wieder in den Stapel hinein "zurückgespült" werden könnten. Der Anteil an Spülgas kann in die Eduktfluidzusammensetzung mit eingerechnet werden, sofern das Spülgas an dem endothermen Hochtemperaturprozess teilnimmt.

Der Behälter kann aus Edelstahl gefertigt sein.

Der Behälter kann weiterhin mit einer innenliegenden Beheizung ausgestattet sein. Dies hat den Vorteil, dass z.B. Wasserdampf welches in einem Eduktfluid vorhanden sein könnte oder diesem beigefügt ist, nicht an den Wänden des Behälters auskondensiert.

Der Behälter kann weiterhin Durchführungen für elektrische Anschlüsse aufweisen. Diese Durchführungen werden mit einem Inertgas, vorzugsweise Stickstoff überspült. Dies hat den Vorteil, dass so Undichtigkeiten z.B. mittels entsprechender Messfühler, detektiert werden können und Zündungen an den elektrischen Anschlüssen vermieden werden können.

Der variable (skalierbare) Aufbau der erfindungsgemäßen Reaktormodule und -systeme mit Plattenelemente sowie die variable Stapelhöhe, welche durch die Anzahl an erfindungsgemäßen Plattenelementen definiert ist, hat den Vorteil, dass unterschiedliche Modulgrößen des erfindungsgemäßen Reaktorsystems schnell und vorhersehbar (Durchsatz) aufgebaut werden können.

In Ausführungsformen weist jedes erfindungsgemäße Plattenelement im erfindungsgemäßen Reaktor die gleiche Anzahl an Eduktfluidkanälen und Produktfluidkanälen auf. So ist es möglich, eine direkte Korrelation von Durchsatz und Stapelhöhe zu erhalten.

Weiterhin erfindungsgemäß ist ein Verfahren zur Durchführung von endothermen Hochtemperaturprozessen unter Verwendung des erfindungsgemäßen Reaktormoduls oder Reaktorsystems wie vorstehend beschrieben.

Weiterhin erfindungsgemäß ist die Verwendung des erfindungsgemäßen Reaktors zur Durchführung endothermer Hochtemperaturprozesse, vorzugsweise ausgewählt aus Reformierungs-Reaktionen, insbesondere Methanreformierung, Ammoniaksynthese, Ammoniakspaltung, Methanolspaltung oder reverse Wassergaskonvertierung (rWGS), wobei die Durchführung einer rWGS besonders bevorzugt ist.

### BEISPIELE

Ein erfindungsgemäßes Reaktorsystem wurde aus 6 baugleichen Reaktormodulen wie in Figur 2 gezeigt aufgebaut. Dabei bestehen die Plattenelemente im Wesentlichen aus der Legierung 2.4633 (hochwarmfeste chemisch beständige Nickel-Chrom-Eisen Legierung). Das Reaktorsystem wurde mit Betriebsparametern gemäß folgender Tabelle betrieben. Der Reaktor war mit insgesamt 1 kg Katalysator auf Basis Nickel gefüllt.

| | | |
|---|---|---|
| CO2 | 452 | I/min (bei Standardbedingungen) |
| H2 gesamt | 377 | I/min (bei Standardbedingungen) |
| H2 über Behälter | 30 | I/min (bei Standardbedingungen) |
| H2O/CO2 | 0,9 | - |
| H2O | 406,8 | I/min (gasförmig bei Standardbedingungen) |
| Druck | 21.8 | bar absolut |
| Mittelwert Heizdrahttemperatur | 795 | °C |

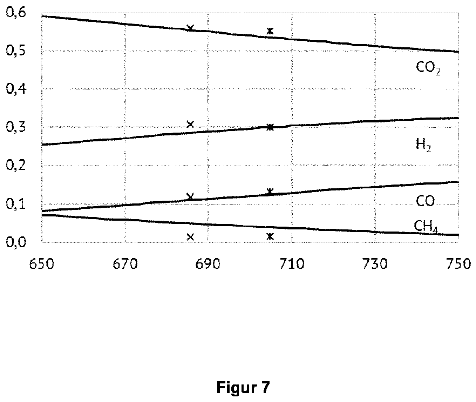

Figur 7 zeigt in diesem Reaktorsystem gemessene Werte der Volumenanteile der Gase (y-Achse) bezogen auf die mittlere Reaktionstemperatur in der Katalysatorschüttung (x-Achse). Kreuze markieren den Messwert der Komponenten CO2, H2, CO und CH4 (von oben nach unten) gegenüber der thermodynamisch zu erwartenden Volumenanteil (Darstellung als Linien). Wie auch aus der folgenden Tabelle ersichtlich ist, ist im erfindungsgemäßen Reaktorsystem aufgrund der verbesserten Wärmebilanz insbesondere der Anteil an unerwünschtem Methan (Nebenreaktionen) deutlich geringer als aufgrund thermodynamischer Berechnungen erwartet. Gleichzeitig ist der Anteil an gewünschtem CO erhöht gegenüber dem berechneten Wert.

| | 685°C Katalysatorbetttemperatur | | 705°C Kat.betttemperatur | |
|---|---|---|---|---|
| | Experiment | Thermodynamik | Experiment | Thermodynamik |
| | Vol.-% | Vol.-% | Vol.-% | Vol.-% |
| CO₂ | 56,02 | 55,24 | 55,26 | 53,54 |
| CO | 11,82 | 11,15 | 13,10 | 12,49 |
| CH4 | 1,50 | 4,91 | 1,53 | 3,96 |
| H2 | 30,67 | 28,70 | 30,10 | 30,02 |

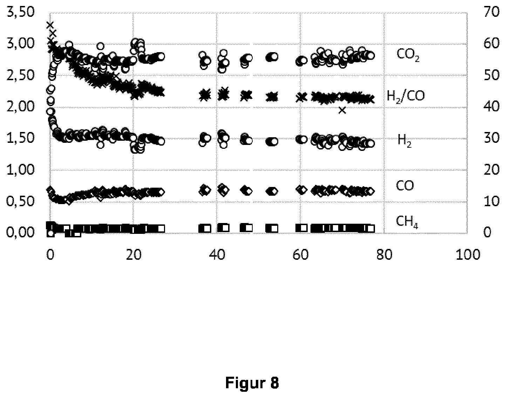

Figur 8 zeigt gemessene Werte der Volumenkonzentration in Prozent (rechte y-Achse) für CO2, H2, CO, CH4 sowie des H2/CO-Verhältnisses (linke y-Achse) als Funktion der Betriebsdauer in Stunden (x-Achse). In den ersten 2 h ist die Aufheizphase gezeigt, bei der sich die Konzentrationsverhältnisse erst ausbilden. Anscheinend fehlende Daten in bestimmten Zeitbereichen sind der Tatsache geschuldet, dass hier die Detektoreinheiten Produktkonzentrationen der nachgeschalteten Fischer-Tropsch Synthese gemessen haben.

## Patentansprüche

1. Plattenelement zum Aufbau eines Reaktormoduls zur Durchführung endothermer Reaktionen bei hohen Temperaturen, wobei das Plattenelement zumindest aufweist:
- mindestens einen ersten mikro- oder milli-strukturierten Eduktfluid-Kanal zur Zuleitung eines ersten Eduktfluids, und
- mindestens einen zweiten mikro- oder millistrukturierten Eduktfluid-Kanal zur Zuleitung eines zweiten, vom ersten verschiedenen, Eduktfluids;
und/oder
- mindestens einen mikro- oder millistrukturierten Produktfluid-Kanal zur Ableitung von einem oder mehreren Produktfluiden, wobei das Plattenelement weiterhin mindestens eine Reaktionszone aufweist, die mit einem Katalysator beschickt werden kann,
wobei sämtliche Fluid-Kanäle mit der mindestens einen Reaktionszone stofflich verbunden sind,
wobei das Plattenelement mindestens ein Heizelement aufweist oder aufnehmen kann,
wobei das mindestens eine Heizelement in thermischer Verbindung mit der Reaktionszone steht,
wobei erster und zweiter Eduktfluid-Kanal, jeweils getrennt, jeweils mindestens ein getrennt regelbares Heizelement enthalten.

2. Plattenelement nach Anspruch 1, wobei ein mindestens erster und ein mindestens zweiter Eduktfluid-Kanal in einer gemeinsamen Mischzone zusammengeführt sind, und sich mindestens ein Heizelement in dieser Mischzone befindet.

3. Plattenelement nach mindestens einem der vorhergehenden Ansprüche, wobei:
(I) das Heizelement einen Widerstandsdraht enthält, der von einer keramischen Hülle umgeben ist, vorzugsweise vollständig von einer keramischen Hülle umgeben ist; und/oder
(II) das Heizelement über mindestens ein hochtemperaturfestes, vorzugsweise flexibles, Material mit dem Plattenelement kraftschlüssig verbunden ist, bevorzugt wobei das hochtemperaturfeste, vorzugsweise flexible, Material ein Fasermaterial oder ein Filzmaterial aufweist, vorzugsweise ausgewählt ist aus Aluminium-, Zirkon- oder Silizium-Oxiden/Hydroxiden, oder Kombinationen davon, oder aus diesen oder einem dieser Materialien besteht; und/oder
(III) das Plattenelement zumindest einen elektrischen Anschluss zum Betrieb eines Heizelementes aufweist, vorzugsweise eine Pluralität solcher elektrischen Anschlüsse, wobei der elektrische Anschluss vorzugsweise im Wesentlichen senkrecht oder entgegen zur Strömungsrichtung der Edukt- und Produktfluide angeordnet sind, wobei vorzugsweise sämtliche elektrische Anschlüsse.im Wesentlichen senkrecht oder entgegen zur Strömungsrichtung der Edukt- und Produktfluide angeordnet sind.

4. Plattenelement nach mindestens einem der vorhergehenden Ansprüche, wobei das mindestens eine Heizelement im Wesentlichen parallel zur Reaktionszone angeordnet ist.

5. Plattenelement nach mindestens einem der Ansprüche 1 bis 3, wobei das mindestens eine Heizelement im Wesentlichen senkrecht zur Reaktionszone angeordnet ist.

6. Plattenelement nach mindestens einem der vorhergehenden Ansprüche, wobei das mindestens eine mit mindestens einem ersten und/oder mit mindestens einem zweiten Eduktfluid-Kanal in stofflicher Verbindung stehende Heizelement thermisch mit der Reaktionszone verbunden ist, und dieses Heizelement von dieser Reaktionszone über eine kleinste gemeinsame Distanz von nicht mehr als 10 mm, vorzugsweise nicht mehr als 5 mm entfernt ist, oder das in Strömungsrichtung am weitesten stromabwärts gelegene Ende eines Heizelements ist in Strömungsrichtung nicht mehr als 35 mm, vorzugsweise nicht mehr als 25 mm besonders bevorzugt nicht mehr als 15 mm von der Reaktionszone entfernt, oder beides, bevorzugt wobei besagte thermische Verbindung umfasst, dass Wärme durch Wärmeleitung über ein Plattenelement vom Heizelement zur Reaktionszone gelangt, oder über das erhitzte Eduktfluid, oder beides.

7. Plattenelement nach mindestens einem der vorstehenden Ansprüche, wobei die Wärmeleitfähigkeit des Plattenelements von 5 W/mK bis 20 W/mK bei 20°C beträgt, vorzugsweise von 8 W/mK bis 16 W/mK bei 20°C, weiter vorzugsweise von 10 W/mK bis 15 W/mK bei 20°C und/oder von 10 W/mK bis 50 W/mK bei 800°C, vorzugsweise von 15 W/mK bis 40 W/mK bei 800°C, weiter vorzugsweise von 20 W/mK bis 35 W/mK bei 800°C.

8. Reaktormodul zur Durchführung endothermer Reaktionen bei hohen Temperaturen, wobei das Reaktionsmodul mindestens zwei gegeneinander verpresste und gegeneinander abgedichtete Plattenelemente gemäß zumindest einem der vorstehend genannten Ansprüche aufweist, vorzugsweise mindestens drei oder vier Plattenelemente, weiter vorzugsweise genau drei oder vier Plattenelemente, wobei zumindest zwei Plattenelemente voneinander verschieden sind.

9. Reaktormodul gemäß Anspruch 8, wobei
(I) mindestens ein Heizelement, vorzugsweise die Mehrzahl der im Reaktormodul befindlichen Heizelemente jeweils mit dem ersten Eduktfluid oder dem zweiten Eduktfluid, oder beiden, in direktem physikalischen Kontakt stehen; und/oder
(II) mindestens ein Heizelement, vorzugsweise die Mehrzahl der im Reaktormodul befindlichen Heizelemente in einem Edukfluid-Kanal oder in einer Mischzone, oder in beiden, von Edukfluid umströmt und/oder durchströmt werden; und/oder
(III) zumindest zwei der gegeneinander verpressten und gegeneinander abgedichteten Plattenelemente durch zumindest zwei allen Plattenelementen gemeinsamen Kanal zur Zufuhr von Eduktfluid sowie zumindest einen allen Plattenelementen gemeinsamen Kanal zur Abfuhr von Produktfluid stofflich miteinander verbunden sind.

10. Reaktorsystem aufweisend zumindest drei, vorzugsweise zumindest sechs weiter vorzugsweise zumindest neun, weiter bevorzugt ganzzahlige Vielfache von "Drei" im Wesentlichen baugleiche Reaktormodule nach mindestens einem der Ansprüche 8 oder 9.

11. Reaktorsystem nach Anspruch 10, wobei
(I) das Reaktorsystem einen druckfesten Behälter aufweist, in welchem die Reaktormodule stofflich von der Umgebung getrennt angeordnet sind, vorzugsweise im Wesentlichen senkrecht zur Standfläche; und/oder
(II) alle Reaktormodule zumindest zwei gemeinsame Kanäle zur Zufuhr von Eduktfluid sowie zumindest einen gemeinsamen Kanal zur Abfuhr von Produktfluid aufweisen; und/oder
(III) der druckfeste Behälter derart ausgestaltet ist, dass er mit einem im Reaktorsystem eingesetzten Reaktionsgas beaufschlagt werden kann, insbesondere mit einem Wasserdampfstrom oder einem Wasserstoffstrom, oder einer Mischung beider; und/oder
(IV) der druckfeste Behälter mit einer Beheizung ausgestattet ist.

12. Verfahren zur Durchführung endothermer Reaktionen, bevorzugt bei hohen Temperaturen, unter Verwendung eines Reaktorsystems nach mindestens einem der Ansprüche 10 oder 11.

13. Verfahren nach Anspruch 12, wobei
(I) die Reaktion ausgewählt ist aus Reformierungs-Reaktionen, insbesondere Methanreformierung, Ammoniaksynthese, Ammoniakspaltung, Methanolspaltung oder reverser Wassergaskonvertierung (rWGS), bevorzugt rWGS; und/oder
(II) erstes und zweites Eduktfluid mit unterschiedlichen, getrennt regelbaren Heizelementen in thermischem Kontakt stehen und der Energieeintrag in den Eduktfluid-Strom über das jeweilige Heizelement unterschiedlich ist.

14. Verfahren Anspruch 12, wobei erstes und zweites Eduktfluid voneinander verschieden sind, wobei vorzugsweise das erste Eduktfluid ein im Wesentlichen CO₂ enthaltendes Fluid ist, und das zweite Eduktfluid ein H₂ enthaltendes Fluid ist.

15. Verfahren nach mindestens einem der Ansprüche 12 bis 14, wobei der druckfeste Behälter des Reaktorsystems mit einem im Reaktorsystem eingesetzten Reaktionsgas beaufschlagt wird, insbesondere mit einem Wasserdampfstrom oder einem Wasserstoffstrom, oder eine Mischung dieser, und wobei der Gasstrom über Leckagen an der Durchführung oder den Durchführungen zu einem oder mehreren Heizelementen zum im Reaktionsraum befindlichen Katalysator gelangt, bevorzugt wobei der Druck außerhalb des Reaktormoduls und innerhalb des druckfesten Behälters des Reaktorsystems größer ist als in den Reaktionsräumen des Reaktormoduls.

## Claims

1. Plate element for a reactor module for carrying out endothermic reactions at high temperatures, wherein the plate element comprises at least:
- at least one first micro- or millistructured reactant fluid channel for supplying a first reactant fluid, and
- at least one second micro- or millistructured reactant fluid channel for supplying a second reactant fluid, different from the first;
and/or
- at least one micro- or millistructured product fluid channel for discharging one or more product fluids, wherein the plate element further comprises at least one reaction zone that can be charged with a catalyst,
wherein all fluid channels are materially connected to the at least one reaction zone,
wherein the plate element comprises or can accommodate at least one heating element,
wherein the at least one heating element is in thermal connection with the reaction zone,
wherein first and second reactant fluid channel, respectively, separately comprise at least one heating element that can be controlled separately.

2. Plate element according to claim 1, wherein at least a first and at least a second reactant fluid channel are brought together in a common mixing zone, and at least one heating element is located in this mixing zone.

3. Plate element according to at least one of the preceding claims, wherein:
(I) the heating element contains a resistance wire which is surrounded by a ceramic sheath, preferably completely surrounded by a ceramic sheath; and/or
(II) the heating element is connected to the plate element in a force-fitting manner via at least one high-temperature-resistant, preferably flexible, material, preferably wherein the high-temperature-resistant, preferably flexible, material comprises a fiber material or a felt material, preferably selected from aluminum, zirconium, or silicon oxides/ hydroxides, or combinations thereof, or consists of these or one of these materials; and/or
(III) the plate element has at least one electrical connection for operating a heating element, preferably a plurality of such electrical connections, preferably wherein the electrical connection is arranged substantially perpendicular to or opposite to the direction of flow of the reactant and product fluids, wherein preferably all electrical connections are arranged substantially perpendicular to or opposite to the direction of flow of the reactant and product fluids.

4. Plate element according to at least one of the preceding claims, wherein the at least one heating element is arranged substantially parallel to the reaction zone.

5. Plate element according to at least one of claims 1 to 3, wherein the at least one heating element is arranged substantially perpendicular to the reaction zone.

6. Plate element according to at least one of the preceding claims, wherein the at least one heating element being in material connection with at least one first and/or at least one second reactant fluid channel is thermally connected to the reaction zone, and this heating element is located at a minimum distance of no more than 10 mm, preferably no more than 5 mm, from this reaction zone, or the end of a heating element located furthest downstream in the direction of flow is located no more than 35 mm, preferably no more than 25 mm, particularly preferably no more than 15 mm, from the reaction zone, or both, preferably wherein said thermal connection comprises heat being transferred by heat conduction via a plate element from the heating element to the reaction zone, or via the heated reactant fluid, or both.

7. Plate element according to at least one of the preceding claims, wherein the thermal conductivity of the plate element is from 5 W/mK to 20 W/mK at 20°C, preferably from 8 W/mK to 16 W/mK at 20°C, more preferably from 10 W/mK to 15 W/mK at 20°C and/or from 10 W/mK to 50 W/mK at 800°C, preferably from 15 W/mK to 40 W/mK at 800°C, and more preferably from 20 W/mK to 35 W/mK at 800°C.

8. Reactor module for carrying out endothermic reactions at high temperatures, wherein the reaction module comprises at least two plate elements pressed against each other and sealed against each other, in accordance with at least one of the above claims, preferably at least three or four plate elements, more preferably exactly three or four plate elements, wherein at least two plate elements are different from each other.

9. Reactor module according to claim 8, wherein
(I) at least one heating element, preferably the majority of the heating elements located in the reactor module, are in direct physical contact with the first reactant fluid or the second reactant fluid, or both; and/or
(II) at least one heating element, preferably the majority of the heating elements located in the reactor module, are surrounded by reactant flow or are flown-through by a reactant fluid, in a reactant fluid channel or in a mixing zone, or in both; and/or
(III) at least two of the plate elements pressed against each other and sealed against each other are connected to each other by at least two channels common to all plate elements for supplying reactant fluid and at least one channel common to all plate elements for removing product fluid.

10. Reactor system comprising at least three, preferably at least six, more preferably at least nine, and most preferably integer multiples of "three" essentially identical reactor modules according to at least one of claims 8 or 9.

11. Reactor system according to claim 10, wherein
(I) the reactor system comprises a pressure-resistant vessel in which the reactor modules are arranged in such a way that they are physically separated from the environment, preferably arranged essentially perpendicular to the base surface; and/or
(II) all reactor modules have at least two common channels for supplying reactant fluid and at least one common channel for removing product fluid; and/or
(III) the pressure-resistant container is designed such that it can be pressurized with a reaction gas used in the reactor system, in particular with a water steam flow or a hydrogen flow, or a mixture of both; and/or
(IV) the pressure-resistant container is equipped with a heating system.

12. Method for carrying out endothermic reactions, preferably at high temperatures, using a reactor system according to at least one of claims 10 or 11.

13. Process according to claim 12, wherein
(I) the reaction is selected from reforming reactions, in particular methane reforming, ammonia synthesis, ammonia cracking, methanol cracking, or reverse water gas shift (rWGS), preferably rWGS; and/or
(II) first and second reactant fluids are in thermal contact with different, separately controllable heating elements and the energy input into the reactant fluid stream via the respective heating element is different.

14. Method according to claim 12, wherein the first and second reactant fluids are different from each other, wherein preferably the first reactant fluid is a fluid containing essentially CO₂, and the second reactant fluid is a fluid containing H₂.

15. Method according to at least one of claims 12 to 14, wherein the pressure-resistant container of the reactor system is pressurized with a reaction gas used in the reactor system, in particular with a water steam flow or a hydrogen flow, or a mixture thereof, and wherein the gas stream reaches one or more heating elements for the catalyst located in the reaction chamber via leaks at the feedthrough or feedthroughs, preferably wherein the pressure outside the reactor module and inside the pressure-resistant container of the reactor system is greater than in the reaction zones of the reactor module.

## Revendications

1. Élément en forme de plaque pour la construction d'un module de réacteur destiné à la réalisation de réactions endothermiques à hautes températures, l'élément en forme de plaque présentant au moins :
- au moins un premier canal de fluide de produit de départ microstructuré ou millistructuré pour l'amenée d'un premier fluide de produit de départ, et
- au moins un deuxième canal de fluide de produit de départ microstructuré ou millistructuré pour l'amenée d'un deuxième fluide de produit de départ, différent du premier ; et/ou
- au moins un canal de fluide de produit d'arrivée microstructuré ou millistructuré pour l'évacuation d'un ou de plusieurs fluides de produit d'arrivée, l'élément en forme de plaque présentant en outre au moins une zone de réaction qui peut être alimentée avec un catalyseur,
dans lequel la totalité des canaux de fluide sont reliés matériellement à la au moins une zone de réaction,
dans lequel l'élément en forme de plaque comprend ou peut accueillir au moins un élément chauffant,
dans lequel le au moins un élément chauffant est en relation thermique avec la zone de réaction,
dans lequel le premier et le deuxième canal de fluide de produit de départ, respectivement séparément, contiennent respectivement au moins un élément chauffant réglable séparément.

2. Élément en forme de plaque selon la revendication 1, dans lequel un au moins premier et un au moins deuxième canal de fluide de produit de départ sont rassemblés dans une zone de mélange commune et au moins un élément chauffant se trouve dans cette zone de mélange.

3. Élément en forme de plaque selon au moins l'une des revendications précédentes, dans lequel :
(I) l'élément chauffant contient un fil de résistance, qui est entouré d'une enveloppe en céramique, de préférence est entièrement entouré d'une enveloppe en céramique ; et/ou
(II) l'élément chauffant est relié par engagement à force avec l'élément en forme de plaque par le biais d'au moins un matériau résistant aux températures élevées, de préférence, flexible, où le matériau résistant aux températures élevées, de préférence flexible, comprend de préférence un matériau en fibres ou un matériau en feutre, choisi de préférence parmi les oxydes/hydroxydes d'aluminium, de zirconium ou de silicium, ou des combinaisons de ceux-ci, ou se compose de ces matériaux ou d'un de ces matériaux ; et/ou
(III) l'élément en forme de plaque comprend au moins un raccordement électrique pour faire fonctionner un élément chauffant, de préférence une pluralité de tels raccordements électriques, où le raccordement électrique est disposé de préférence sensiblement perpendiculairement ou à l'opposé de la direction de circulation des fluides de produit de départ et de produit d'arrivée, la totalité des raccordements électriques étant de préférence disposés sensiblement perpendiculairement ou à l'opposé de la direction de circulation des fluides de produit de départ et de produit d'arrivée.

4. Élément en forme de plaque selon au moins l'une des revendications précédentes, dans lequel le au moins un élément chauffant est disposé sensiblement parallèlement à la zone de réaction.

5. Élément en forme de plaque selon au moins l'une des revendications 1 à 3, dans lequel le au moins un élément chauffant est disposé sensiblement perpendiculairement à la zone de réaction.

6. Élément en forme de plaque selon au moins l'une des revendications précédentes, dans lequel le au moins un élément chauffant en relation matérielle avec au moins un premier et/ou avec au moins un deuxième canal de fluide de produit de départ est relié thermiquement avec la zone de réaction, et ledit élément chauffant n'est pas éloigné de ladite zone de réaction d'une distance commune la plus petite de plus 10 mm, de préférence de plus 5 mm, ou l'extrémité d'un élément chauffant située le plus en aval dans la direction de circulation n'est pas éloignée de plus de 35 mm, de préférence pas éloignée de plus de 25 mm, particulièrement préférentiellement pas éloignée de plus de 15 mm de la zone de réaction dans la direction de circulation, ou les deux, de préférence où ladite liaison thermique englobe le fait que la chaleur va de l'élément chauffant jusqu'à la zone de réaction par le biais d'une conduite de chaleur au-dessus d'un élément en forme de plaque, ou par le biais du fluide de produit de départ chauffé, ou les deux.

7. Élément en forme de plaque selon au moins l'une des revendications précédentes, dans lequel la conductivité thermique de l'élément en forme de plaque est de 5 W/mK à 20 W/mK à 20°C, de préférence de 8 W/mK à 16 W/mK à 20°C, de manière mieux préférée de 10 W/mK à 15 W/mK à 20°C et/ou de 10 W/mK à 50 W/mK à 800°C, de préférence de 15 W/mK à 40 W/mK à 800°C, de manière mieux préférée de 20 W/mK à 35 W/mK à 800°C.

8. Module de réacteur pour la réalisation de réactions endothermiques à hautes températures, le module de réacteur présentant au moins deux éléments en forme de plaque compressés l'un contre l'autre et étanches l'un vis-à-vis de l'autre selon au moins l'une des revendications précitées, de préférence au moins trois ou quatre éléments en forme de plaque, de manière mieux préférée exactement trois ou quatre éléments en forme de plaque, au moins deux éléments en forme de plaque étant différents l'un de l'autre.

9. Module de réacteur selon la revendication 8, dans lequel
(I) au moins un élément chauffant, de préférence la majorité des éléments chauffants se trouvant dans le module de réacteur sont en contact physique direct respectivement avec le premier fluide de produit de départ ou le deuxième fluide de produit de départ, ou les deux ; et/ou
(II) au moins un élément chauffant, de préférence la majorité des éléments chauffants se trouvant dans le module de réacteur dans un canal de fluide de produit de départ ou dans une zone de mélange, ou dans les deux, sont entourés et/ou traversés par le fluide de produit de départ ; et/ou
(III) au moins deux éléments en forme de plaque compressés l'un contre l'autre et étanches l'un vis-à-vis de l'autre sont reliés matériellement les uns avec les autres par le biais d'un canal commun à tous les au moins deux éléments en forme de plaque pour l'amenée du fluide de produit de départ ainsi que d'un canal commun à tous les au moins un élément en forme de plaque pour l'évacuation du fluide de produit d'arrivée.

10. Système de réacteur présentant au moins trois, de préférence au moins six, de manière mieux préférée au moins neuf, de manière encore mieux préférée un multiple entier de « trois » modules de réacteur de construction sensiblement identique selon au moins l'une des revendications 8 ou 9.

11. Système de réacteur selon la revendication 10, où
(I) le système de réacteur comprend un récipient résistant à la pression, dans lequel les modules de réacteur sont disposés matériellement séparés de l'environnement, de préférence sensiblement perpendiculairement à la surface de support ; et/ou
(II) tous les modules de réacteur comprennent au moins deux canaux communs pour l'amenée de produit de départ ainsi qu'au moins un canal commun pour l'évacuation du fluide de produit d'arrivée ; et/ou
(III) le récipient résistant à la pression est conçu de sorte qu'il puisse être soumis à un gaz de réaction mis en œuvre dans le système de réacteur, en particulier avec un courant de vapeur d'eau ou un courant d'hydrogène, ou un mélange des deux ; et/ou
(IV) le récipient résistant à la pression est pourvu d'un chauffage.

12. Procédé pour la réalisation de réactions endothermiques, de préférence à hautes températures, utilisant un système de réacteur selon au moins l'une des revendications 10 ou 11.

13. Procédé selon la revendication 12, dans lequel
(I) la réaction est choisie parmi les réactions de reformage, en particulier le reformage du méthane, la synthèse de l'ammoniac, la séparation de l'ammoniac, la séparation du méthanol, ou la conversion inverse du gaz à l'eau, de préférence la conversion inverse du gaz à l'eau ; et/ou
(II) le premier et le deuxième fluide de produit de départ sont en contact thermique avec différents éléments chauffants réglables séparément, et l'apport d'énergie dans le courant de fluide de produit de départ au-dessus de l'élément chauffant respectif est différentiel.

14. Procédé selon la revendication 12, dans lequel le premier et le deuxième fluide de produit de départ sont différents l'un de l'autre, dans lequel de préférence le premier fluide de produit de départ est un fluide contenant essentiellement du CO₂, et le deuxième fluide de produit de départ est un fluide contenant du H₂.

15. Procédé selon au moins l'une des revendications 12 à 14, dans lequel le récipient du système de réacteur résistant à la pression est soumis à un gaz de réaction mis en œuvre dans le système de réacteur, en particulier avec un courant de vapeur d'eau ou un courant d'hydrogène, ou un mélange de ceux-ci, et dans lequel le courant de gaz parvient jusqu'au catalyseur se trouvant dans l'espace de réaction par le biais de fuites sur la conduite ou sur les conduites vers un ou plusieurs éléments chauffants, dans lequel la pression en dehors du module de réacteur et à l'intérieur du récipient du système de réacteur résistant à la pression est de préférence supérieure à celle dans les espaces de réaction du module de réacteur.
